(19) Europäisches Patentamt
European Patent Office
Office européen des brevets

(11) Veröffentlichungsnummer: **0 088 930**
**B1**

(12) # EUROPÄISCHE PATENTSCHRIFT

(45) Veröffentlichungstag der Patentschrift: 09.04.86

(21) Anmeldenummer: 83101927.8

(22) Anmeldetag: 28.02.83

(51) Int. Cl.⁴: C 09 B 44/02, C 09 B 62/09, D 06 P 1/41, D 06 P 1/382, C 09 B 56/04

(54) **Triazol-Triazinyl-Azo-Farbstoffe.**

(30) Priorität: 12.03.82 DE 3208933

(43) Veröffentlichungstag der Anmeldung: 21.09.83 Patentblatt 83/38

(45) Bekanntmachung des Hinweises auf die Patenterteilung: 09.04.86 Patentblatt 86/15

(84) Benannte Vertragsstaaten: CH DE FR GB LI

(56) Entgegenhaltungen:
BE - A - 644 981
US - A - 2 368 844

(73) Patentinhaber: BAYER AG, Konzernverwaltung RP Patentabteilung, D-5090 Leverkusen 1 Bayerwerk (DE)

(72) Erfinder: Krische, Bernd, Dr., Royal Institute of Techn. Dept. of Organic Chem., Stockholm 70 (SE)
Erfinder: Henk, Hermann, Dr., Roggendorfstrasse 55, D-5000 Köln 80 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 088 930 B1

LIBER, STOCKHOLM 1986

**Beschreibung**

Die vorliegende Erfindung betrifft neue, gegebenenfalls metallhaltige Triazol-Triazinyl-Azo-Farbstoffe der allgemeinen Formel

K-N=N-T-NR-D-NR'-T'-N=N-K' (1)

worin

K, K' = Rest einer Kupplungskomponente der Benzol-, Naphthalin- oder heterocyclischen Reihe oder Rest einer enolisierbaren CH-aciden Verbindung,

T, T' = Rest der allgemeinen Formel

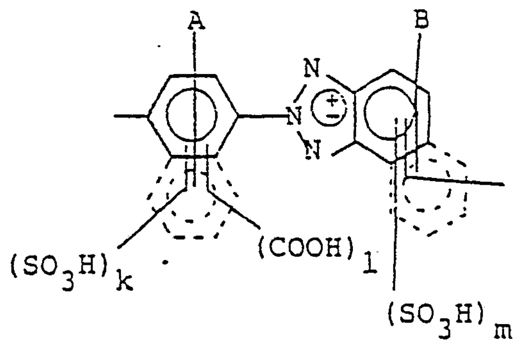

(2)

worin

A = H oder nichtionogener Substituent,

B = H, $C_1$-$C_4$-Alkyl oder $C_1$-$C_4$-Alkoxy,

k,m = 0, 1 oder 2

1 = 0 oder 1

und wobei das Triazol-haltige Ringsystem jeweils an dem Rest NR bzw. NR' gebunden ist,

R, R' = H, $C_1$-$C_4$-Alkyl oder $C_1$-$C_4$-Hydroxyalkyl,

D = Rest der allgemeinen Formel

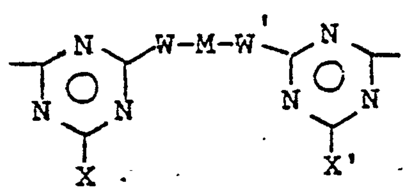

(3)

wobei

W, W' = $NR^2$

mit $R^2$ = H, $C_1$-$C_4$-Alkyl oder $C_1$-$C_4$-Hydroxy-alkyl,

X, X' = Substituent,

M = gegebenenfalls substituierter Rest der Benzoloder Naphthalinreihe

Die Erfindung betrifft weiterhin Verfahren zur Herstellung von Farbstoffen der Formel (1) sowie ihre Verwendung zum Färben und Bedrucken von OH und NH-Gruppen-haltigen Fasermaterialien (wie z.B. Cellulose, Wolle oder synthetischen Polyamiden) und Papier.

Geeignete Kupplungskomponenten KH, K'H der Benzolreihe sind z.B:

Phenol; 2-, 3-, bzw. 4-Methyl-phenol; 2-Hydroxybenzol-carbonsäure; 4-Chlorphenol; 2-Methyl-5- oder 6-Chlorphenol; 3-Methyl-6-chlorphenol; 2-Ethylphenol; 2,5-Dichlorphenol; 2,6-Diethylphenol; 2-Methoxy- oder Ethoxyphenol; 3-Methoxy-phenol; 3-Acetylaminophenol.

Anilin; 2- oder 3-Methyl-anilin; 2,3-, 2,5-, 2,6-Dimethylanilin; N-Methyl- oder N,N-Dimethyl-anilin; N-Ethyl, oder N,N-Diethylanilin; N,N-Dipropyl-anilin; N-(2-Chlorethyl)-N-butyl-anilin; N-Methyl-N-(2-hydroxy-ethyl)-anilin; N,N-Bis-(2-Hydroxyethyl)-anilin; N-Methyl-N-(2-cyan-ethyl)-anilin; N,N-Diethyl-2- oder -3-methyl-anilin; N,N-(2-hydroxy-ethyl)-3-methylanilin; N,N-Diethyl-3-acetaminoanilin; N,N-(2-hydroxy-ethyl)-3-acetamino-anilin; N,N-Diethyl-3-ethoxy-anilin; N,N-(2-hydroxy-ethyl)-2-methoxy-5-anilin; N,N-(2-acetoxy-ethyl)-3-acetamino-anilin; Phenolsulfonsäure-(2) und -(3).

Geeignete Kupplungskomponenten KH, K'H der Naphthalinreihe sind z.B.:

Naphthol-(1)-sulfonsäure-(3), -(4) und -(5); Naphthol-(2)-sulfonsäure-(4), -(5), -(6) und -(7); 6-Amino-naphthol-(1)-sulfonsäure-(3); 6-Acetylamino-naphthol-(1)-sulfon-säure-(3); 6-Benzoylamino-naphtol-(1)-sulfonsäure-(3); 7-Amino-naphthol-(1)-sulfonsäure-(3); 7-Dimethylamino-naphthol-(1)-sulfonsäure-(3); 7-Anilino-naphthol-(1)-sulfonsäure-(3), 7-Acetylamino-naphthol-(1)-sulfonsäure-(3); 7-Benzoylamino-naphthol-(1)-sulfonsäure-(3); 8-Acetylamino-naphthol-(1)-sulfonsäure-(5); 8-Acetylamino-naphthol-(2)-sulfonsäure-(5) oder -(6); 6-(4-Amino-ben-zoylamino)-naphthol-(1)-sulfonsäure-(3); 8-Acetylamino-und Benzoylamino-naphthol-(1)-disulfonsäure-(3,5); 7-Acetylamino-naphthol-(1)-disulfonsäure-(3,6); 8-Amino-, -Acetylamino-, -Benzoylamino-, -Benzolsulfonylamino-naphthol-(1)-disulfonsäure-(3,6); Naphthol-(1)-disulfonsäure-(3,6), -(3,7), -(3,8), -(4,8), -(5,7); Naphthol-(2)-disulfonsäure-(3,6), -(3,7), -(4,8), -(5,7), -(6,8); Naphthylamin-(1)-sulfonsäure-(2) bis -(8); Naphthylamin-(2)-sulfonsäure-(3) bis (7); Naphthylamin-(1)-disulfonsäure-(5,7), -(4,8), -(3,8), -(4,6), -(3,7), -(3,6); Naphthylamin-(2)-disulfonsäure-(5,7), -(4,7), -(3,7), -(3,6); 1-Amino-naphthalin; 1- und 2-Hydroxy-naphthalin; 8-Acetamino-2-hydroxynaphthalin; 8-Methansulfonylamino-2-hydroxynaphthalin; 1-Hydroxy-naphthalinsulfonamid-(4); 2-Hydroxynaphthoesäure-(3), -amid, -anilid, -chloranilid, -toluidid.

Geeignete Kupplungskomponenten KH, K'H der heterocyclischen Reihe sind z.B.;

3-Methyl-pyrazolon-(5), 1-Phenyl-3-methyl-pyrazolon-(5), 1-(2-Chlorphenyl)-3-methyl-pyrazolon-(5), 1-(2,5-Dichlor-phenyl)-3-methyl-pyrazolon-(5), 1-(3-Methylphenyl)-pyra-zolon-(5)-carbonsäure-(3) und -ethylester, 1-Phenyl-3-methyl-pyrazolon-(5)-imid, 1-(2-Chlor-phenyl)-3-methyl-pyrazolon-(5)-imid, 1,o-Tolyl-3-methyl-pyrazolon-(5)-imid, 1-(2-, 3-, 4-Sulfo-phenyl)-3-methyl-pyrazolon-(5), 1-(6-Chlor-3-sulfophenyl)-3-methyl-pyrazolon-(5), 1-(2,5-Dichlor-4-sulfo-phenyl)-3-methyl-pyrazolon-(5), 1-(4-Sulfo-2-methylphenyl)-3-methyl-pyrazolon-(5), 1-(6-Chlor-3-sulfo-2-methylphenyl)-3-methyl-pyrazolon-(5), 1-(4-Sulfo-phenyl)-3-methyl-pyrazolon (5)-imid, 1-(8-Sulfo-naphtyl-(2))-3-methyl-pyrazolon-(5)-imid, 1-[6-Sulfo-napthyl-(2)]-3-methyl-pyrazolon-(5), 1-(4-Sulfophenyl)-pyrazolon-(5)-carbonsäure-(3), 1-(6-Chlor-4-sulfo-2-methyl-phenyl)-pyrazolon-(5)-carbonsäure-(3)-ethylester, 1-(4-Amino-phenyl)-3-methyl-pyrazolon-(5), 1-(3-Amino-phenyl)-3-methyl-pyrazolon-(5), 1-(3-Amino-5-sulfo-2-methyl-phenyl)-3-methyl-pyrazolon-(5), 1-(4-Amino-phenyl)-pyrazolon-(5)-carbonsäure-(3), 1-(3 Aminophenyl)-pyra-zolon-(5)-carbonsäure-(3), 1-[3-(3-Nitrobenzoyl)-amino-phenyl]-pyrazolon-(5)-carbonsäure-(3), 1-Carboxymethyl-3-methyl-pyrazolon-(5), 1-(2-Cyan-ethyl)-3-methyl-pyra-zolon-(5), 1-(2-Chlorethyl)-3-methyl-pyrazolon-(5), 1-Methyl-, Ethyl-, -Propyl-3-methyl-pyrazolon-(5), 1,4-Dimethyl-2-hydroxy-pyridon(6); 1,4-Dimethyl-2-hydroxy-pyridon(6)-5-carbonsäureamid, -5-sulfonsäure und -5-methansulfonsäure; 2-Hydroxypyridon(6); 2-Hydroxypyri-don(6)-4-carbonsäure; 1-Methyl-2,4-dihydroxypyridon(6)-5-carbonsäuremethylamid; 4-Methyl-2-phenyl-1H,7H-pyra-zolo[-3,4-b]pyridin-3,6-dion; 4-Methyl-2-(4-sulfophenyl) 1H,7H-pyrazo1o[3,4-b]pyridin-3,6-dion; 4-Hydroxycumarin; 2,4-Dihydroxychinolin; 4,6-Dihydroxy-2-mercapto-pyridin; 4-Amino-2,6-dihydroxypyrimidin; 2-Cyanamino-4,6-dihy-droxypyrimidin; 2-Amino-4,6-dihydroxypyrimidin; 4-Amino-6-hydroxy-2-mercaptopyridin; 1-Methyl-2-hydroxy-4-methyl-5-cyan-pyridon-(6); 1-Phenyl-2-hydroxy-4-methyl-5-cyan-pyridon-(6); 2,4,6-Trihydroxypyrimidin; 2-Methyl-4,6-dihydroxy-pyrimidin; 2-phenyl-4-amino-6-hydroxy-pyrimi-din; 2-Phenyl-4,6-dihydroxy-pyrimidin.

Geeignete Kupplungskomponenten KH, K'H aus der Reihe der enolisierbaren CH-aciden Verbindungen sind z.B.

Acetessigsäure-anilid; -o-, -m-, -p-anisidid; -o-, -m-, -p-toluidid; Acetessigsäure-p-chlor-anilid; Acetessigsäure-(4-chlor-2-methyl-anilid); Acetessigsäure-(2,4-oder 2,5- oder 2,6-dimethyl-anilid); Acetessigsäure-(4-sulfo-anilid), Acetessigsäure-(2-methoxy-4-sulfo-5-methyl-anilid); Acetessigsäure-(2,4-, 2,5- oder 3,5-di-sulfo-anilid), Acetessigsäure-(2,5-disulfo-4-acetamino-anilid); Acetessigsäure-(2- oder 3-Sulfo-4-ethoxy-anilid); Acetessigsäure-(3-sulfo-4-methyl-anilid).

Geeignete nichtionogene Substituenten A der Formel (2) sind z.B.

$C_1$-$C_4$-Alkyl wie $CH_3$, $C_2H_5$, n-$C_3H_7$, i-$C_3H_7$, n-$C_4H_9$, i-$C_4H_9$, t-$C_4H_9$; $C_1$-$C_3$-Alkoxy wie $OCH_3$, $OC_2H_5$, $OC_3H_7$ (n und i), OH; Halogene, (wie F, Cl, Br), Cyano, Acylamino, (wie Formylamino, Acetylamino und Propionylamino).

Geeignete Substituenten X, X' sind z.B. Halogene oder Gruppen der Formeln

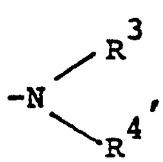, $-OR^5$ oder $SR^5$

worin

$R^3$, $R^4$ unabhängig voneinander H, $C_1$-$C_4$-Alkyl, $C_1$-$C_4$-Hydroxyalkyl, Aryl, Aralkyl, Cycloalkyl oder einen Heterocyclus bedeuten oder zusammen, gegebenenfalls unter Einschluß eines oder mehrerer Heteroatome einen Ring bilden, insbesondere einen 5- oder 6-gliedrigen, und

$R^5$ für H, $C_1$-$C_4$-Alkyl, $C_1$-$C_4$-Hydroxyalkyl, Aryl oder Aralkyl oder einen heterocyclischen Rest steht.

Die Alkyl-, Aryl-, Aralkyl-, Cycloalkyl- und heterocyclischen Reste können übliche Substituenten aufweisen (wi z.B. OH, CN, $SO_3H$, COOH, $NO_2$, Cl, Br, F).

Aryl steht insbesondere für phenyl oder Naphthyl.

Geeignete zweiwertige Substituenten M sind gegebenenfalls zusätzlich substituierte Benzol- und Naphthalinderivate, insbesondere Sulfonsäuren dieser Verbindungen.

Bevorzugte Substituenten M (Mittelkomponenten) sind solche der Formel $M_1$:

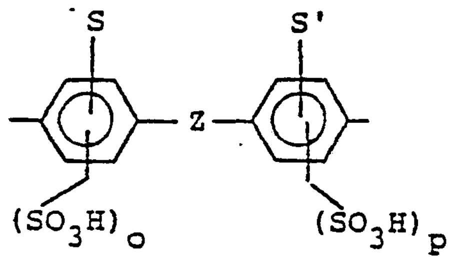

(4)

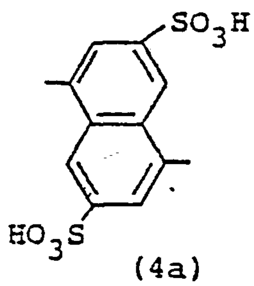

(4a)

und

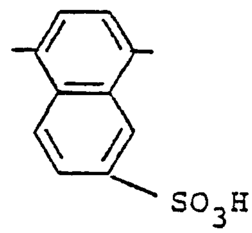

(4b)

worin

S,S' = H, COOH, $CH_2$-COOH oder nichtionogener Substituent (wie z.B. Alkyl($C_1$-$C_4$): Methyl, Ethyl, Alkoxy($C_1$-$C_4$): Methyl, Ethoxy, Halogen: Chlor NH Acyl ($C_1$-$C_4$): Formylamino, Acetylamino, Propionylamino)

Z = direkte Bindung oder -CH=CH-.

Bevorzugt sind Farbstoffe der Formeln (5) und (6)

K-N=N-T-NR-D-NR-T-N=N-K (5)

K-N=N-T-NR-$D^1$-NR-T'-N=N-K' (6)

worin $D^1$ der allgemeinen Formel

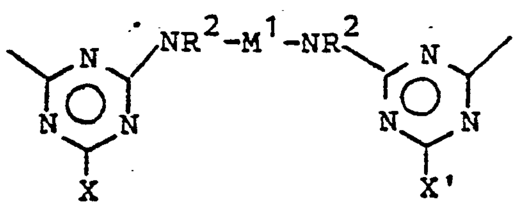

(7)

entspricht und die übrigen Formelreste K,K',D,R,T,T' die unter Formel (1) bzw. (4), (6a) und (4b) gegebene Bedeutung haben.

Weiterhin bevorzugt sind Farbstoffe der Formel

$K^2$-N=N-T-NR-$D^1$-NR-T-N=N-$K^2$ (8)

wobei $K^2$ für den Rest einer Kupplungskomponente der Benzol-, Naphthalin-, Pyrazolon-, Pyridon-, Pyrimidon-, Indol-, Aminopyrazol-, Aminopyridin-, Aminopyrimidin-, Chinolon-, Cumarin- und Acetessigarylid-Reihe steht und die übrigen Substituenten die unter Formel (6) gegebene Bedeutung haben. Besonders bevorzugt sind solche, in denen R = H ist.

Weiterhin bevorzugt sind Farbstoffe der Formel

$K^2$-N=N-$T^1$-NR-D-NR-$T^1$-N=N-$K^2$ (9)

wobei in Formel (9) der Rest $R^1$ der allgemeinen Formel

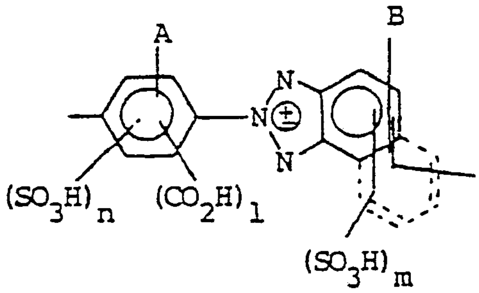

(10)

entspricht, wobei das triazolhaltige Ringsystem an den Rest NR gebunden ist, und worin n = 0 oder 1 und $K^2$, D und R die unter Formel (8) gegebene Bedeutung haben und R vorzugsweise für Wasserstoff steht, und A, B, 1 und n die unter Formel (2) angegebene Bedeutung besitzen.

Weiterhin bevorzugt sind Farbstoffe der Formel

$K^2\text{-N}=\text{N-T-NR-D-NR-}T^2\text{-N}=\text{N-}K^2$ (11)

wobei $T^2$ der allgemeinen Formel

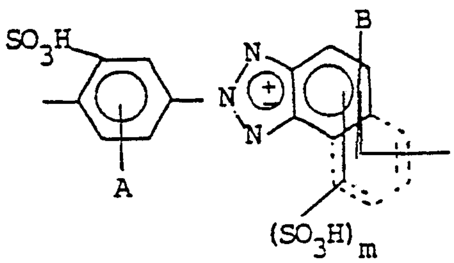

(12)

entspricht, wobei das triazolhaltige Ringsystem an den Rest NR gebunden ist und worin $K^2$, D und R die unter Formel (8) und A, B und m die unter Formel (2) gegebene Bedeutung haben.

Weiterhin bevorzugt sind Farbstoffe der Formel (13) und (14)

$K^2\text{-N}=\text{N-}T^3\text{-NR-D-NR-}T^3\text{-N}=\text{N-}K^2$ (13)

$K^2\text{-N}=\text{N-}T^4\text{-NR-D-NR-}T^4\text{-N}=\text{N-}K^2$ (14)

worin

$T^3$ =

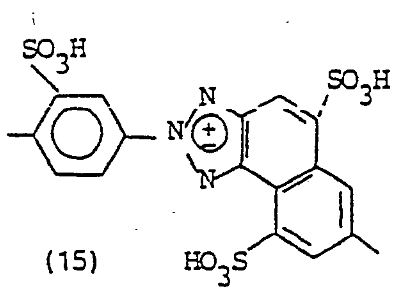

(15)

$T^4$ =

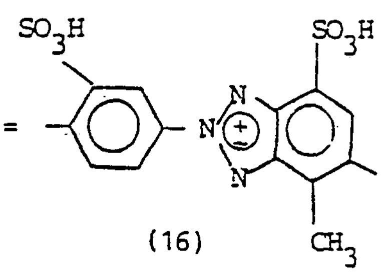

(16)

und $K^2$, R und D die unter 8 bzw. 1 gegebene Bedeutung haben und vorzugsweise R = H ist, und wobei in den Formeln (15) und (16) das triazolhaltige Ringsystem mit dem Rest NR verknüpft ist.

Weiterhin bevorzugt sind Farbstoffe der Formeln (17) und (18):

$K^2\text{-N}=\text{N-}T^3\text{-NH-}D^2\text{-NH-}T^3\text{-N}=\text{N-}K^2$ (17)

$K^2\text{-N}=\text{N-}T^4\text{-NH-}D^2\text{-NH-}R^4\text{-N}=\text{N-}K^2$ (18)

worin

$D^2$ = 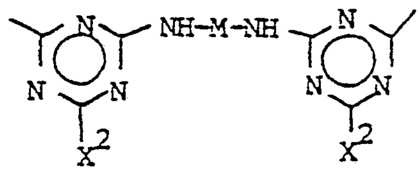 (19)

und worin
$X^2$ = F, Cl,

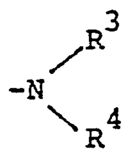

oder $OR^5$,
wobei die Reste $K^2$, M, $R^3$, $R^4$, $R^5$, $T^3$, $T^4$ die oben angegebene Bedeutung besitzen.

Besonders bevorzugt sind Farbstoffe der oben angegebenen Formeln (8), (9), (11), (13), (14), (17) und (18), in denen $K^2$ ein Substituent ist, der in einer seiner tautomeren Formen einer der Formeln (20), (21), (22) oder (23) entspricht:

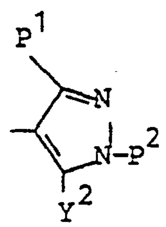 (20)

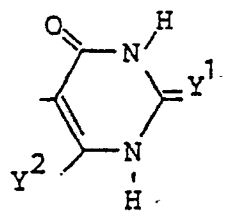 (21)

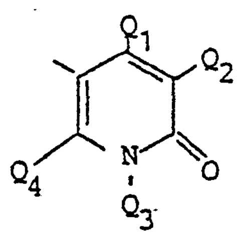 (22)

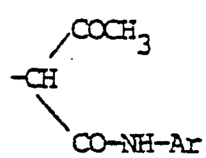 (23)

wobei die Substituenten in den Formeln (20) bis (23) folgende Bedeutung haben:
$P^1$ = $CH_3$, $NH_2$, COOH, $CONH_2$, gegegebenenfalls substituiertes Phenyl,
$P^2$ = H, $CH_3$ und gegebenenfalls substituiertes Phenyl,
$Y^1$ = O, S, NH, NCN,
$Y^2$ = OH, $NH_2$,
$Q^1$ = H, $C_1$-$C_4$-Alkyl, COOH, $CONH_2$, OH,

$Q^2$ = H, Halogen, CN, $CH_3CO$, CONHR (wobei R = H oder $CH_3$),
$Q^3$ = H, $C_1$-$C_4$-Alkyl,
$Q^4$ = H, OH,
Ar = gegebenenfalls substituiertes Phenyl, und wobei $Q^1$ und $Q^4$ beide nicht gleichzeitig für OH stehen dürfen
Als Substituenten kommen für gegebenenfalls substituiertes Phenyl $P^1$, $P^2$, Ar vorzugsweise in Frage:
$P^1$ = $CH_3$, $CO_2H$, $CO_2CH_3$, $CO_2C_2H_5$, $CO_2NH_2$
$P^2$ = $CH_3$, Cl, $SO_3H$, NH-Acyl.

Die Farbstoffe wurden in den Formeln in Form der freien Säuren beschrieben, ihre Salze, insbesondere die Alkaliund Ammoniumsalze sind ebenfalls Gegenstand dieser Erfindung.

Die Herstellung der erfindungsgemäßen Farbstoffe erfolgt durch Umsetzen der Einzelkomponenten: Kupplungskomponente H-K, Diaminotriazol T, Cyanurchlorid bzw. Fluorid, der Mittelkomponente H-W-M-W-H und gegebenenfalls einem Nucleophil XH in beliebiger Reihenfolge.

a) Z.B. kann die Mittelkomponente zuerst mit 2 Äquivalenten Cyanurchlorid bzw. -fluorid umgesetzt und dieses Vorkondensat mit dem Triazol verknüpft werden. Die erhaltene Diaminoverbindung kann dann entweder tetrazotiert, gekuppelt und dann gegebenenfalls mit dem Nucleophil XH umgesetzt werden, oder die Reaktion mit dem Nucleophil erfolgt vor der Tetrazotierung.

b) Es kann auch zuerst die Verknüpfung des Aminotriazols mit Cyanurchlorid bzw. -fluorid erfolgen. Dieses Vorkondensat wird mit der Mittelkomponente und dann wie unter a) umgesetzt, oder das Vorkondensat wird diazotiert, gekuppelt und dann erst mit der Mittelkomponente umgesetzt.

c) Oder es kann zuerst das Chromophor aus Triazol und Kupplungskomponente gebildet, dieses mit Cyanurchlorid(fluorid)-Mittelkomponente-Vorkondensat umgesetzt oder erst mit Cyanurchlorid(fluorid) und dann mit der Mittelkomponente verknüpft werden. Anschließend erfolgt jeweils gegebenenfalls Umsetzung mit dem Nucleophil XH.

Geeignete Triazole T und deren Darstellung sind z.B. in DE-OS 2 208 972 beschrieben.

Geeignete Mittelkomponenten HW-M-W'H sind z.B.

Dianisidin-, Benzidin-3-sulfon- und 3,3'-Disulfonsäure; Benzidin-3,3'-dicarbonsäure; 4,4'-Diaminostilben-2,2'-disulfonsäure; 4,4'-Diaminodiphenylharnstoff-3,3'-disul-fonsäure; 2,5-Bis[(4-aminobenzoyl)amino]-benzolsulfonsäure, 4,4'-Diaminobenzophenon; 4,4'-Diaminobenzanilid; 2-Amino-5[(4-aminobenzoyl)amino]-benzoesäure; 5-Amino-2-[(4-ami-nophenyl)amino]-benzolsulfonsäure; 5-Amino-2-[(4-amino-3-methylphenyl)amino]-benzolsulfonsäure; 4,4'-Diaminoazo-benzol; 2,2'-[1,4-phenylen-bis(imino)]-bis-[5-amino-benzolsulfonsäure]; 1,5-Diamino-naphthalin-3,7-disulfonsäure; 1,4-Diaminonaphthalin-6-sulfonsäure; 3,7-Diaminonaphtha-lin-1,5-disulfonsäure.

Wenn X und/oder X' ein faserreaktiver Rest ist, sind weitere geeignete Mittelkomponenten HW-M-W'H:
4,4'-Diaminodiphenylether-2-sulfonsäure; 4,4'-Diamino-diphenylsulfid-2,2'-disulfonsäure; 2,5-Diaminobenzolsulfonsäure, 4,4'-Diaminodiphenylmethan; 4,4'-Diaminobi-benzyl-2,2'-disulfonsäure; 1,4-Phenylendiamin; 4,4'-Di-aminodiphenylphenylsulfon; 2,4-Diaminobenzol-sulfonsäure und 1,5-disulfonsäure.

Für die Herstellung der erfindungsgemäßen Verbindungen geeignete Nucleophile XH, X'H sind beispielsweise die folgenden:
Wasser; Ethanol; 1- und 2-Propanol; 1-, 2- und t-Butanol, Ethylenglykol; Diethylenglykol; Diethylenglykolmonomethylether, Triethylenglykol, Glyzerin; 2-Mercaptoetha-nol; Ethylmercaptan; Butylmercaptan; Thioglyzerin; Thioglykolsäure; Thiophenol; Amino- und Mercatogruppenhaltige Heterocyclen wie z.B: 3-Aminosulfolan, Furfurylamin; 2-Mercaptothiazol; 2-Aminothiazol; 2-Amino-pyridin; Ammoniak; Methylamin; Ethylamin; n-Propanolamin, iso-Propanolamin; n-, iso- und tert.-Butylamin; n-Pentylamin, n-Hexylamin, Cyclohexylamin; Dimethylamin; Diethylamin; Di-n-propyl-amin; Di-iso-propylamin; Methylethylamin; Ethanolamin, N-Methyl-ethanolamin, Diethanolamin; 2-Methoxyethylamin, 2-Ethoxyethylamin, Aminoessigsäure; N-Methylaminoessigsäure; Taurin; N-Methyltaurin; Methylaminomethansulfonsäure; Pyrrolidin; Piperidin; 1-Methyl-, Morpholin, Benzylamin, β-Phenyl-ethylamin, N-Methylbenzylamin, Dibenzylamin, 1-(2-Hy-droxyethyl)- und 1-(2-Aminoethyl)piperazin; sowie gegebenenfalls substituierte Aminobenzole und Aminonaphthaline.

Die neuen Farbstoffe sind geeignet zum Färben und Bedrucken von textilen Substraten und Papier.

Die neuen Farbstoffe eignen sich besonders zum Färben und Bedrucken von natürlichen und regenerierten Cellulosefasermaterialien Wie Baumwolle und Zellwolle. Die erhaltenen Färbungen zeichnen sich durch gute Echtheitseigenschaften aus, insbesondere Naßechtheiten.

**Beispiel 1**

28 Teile Cyanurchlorid werden in 155 Teilen Aceton gelöst und diese Lösung in 540 Teilen Eiswasser suspendiert. Bei 0-5°C werden eine Lösung von 28 Teilen 4,4'-Diaminostilben-2,2'-disulfonsäure in 370 Teilen Wasser zugegeben. Durch Zugabe von Sodalösung wird der pH-Wert zwischen 2,5 und 3,5 gehalten. Nach beendeter Umsetzung werden 65,4 Teile des Diaminotriazols der Formel

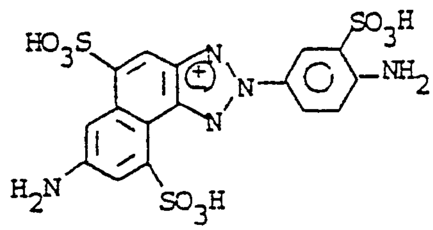

gelöst in 100 Teilen Wasser zugetropft, die Suspension auf 40° C erwärmt und ein pH-Wert von 5 gehalten. Nach beendeter Umsetzung wird nochmals dieselbe Menge Triazol zugefügt und die Reaktion bei 40°C und pH 5,5 beendet. Das Aceton wird abdestilliert und bis zur vollendeten Reaktion gerührt. Überschüssiges Ethanolamin wird abdestilliert und die Lösung abkühlen gelassen.

Es werden 34 Teile 30 %ige $NaNO_2$-Lösung zugefügt, durch Eis auf 5°C gekühlt und 130 Teile konzentrierte Salzsäure zugetropft. Nach 3 Stunden wird der Nitritüberschuß mit Amidosulfonsäure entfernt. 22,5 Teile 2,6-Dihydroxy-pyridin-4-carbonsäure werden zugefügt und mit Sodalösung ein pH-Wert von 9 eingestellt. Nach beendeter Umsetzung werden 100 Teile Kochsalz zugefügt und der ausgefallene Farbstoff abgesaugt und getrocknet.

Ausbeute: 120 Teile Farbstoff der Formel (24) (in Form der freien Säure)

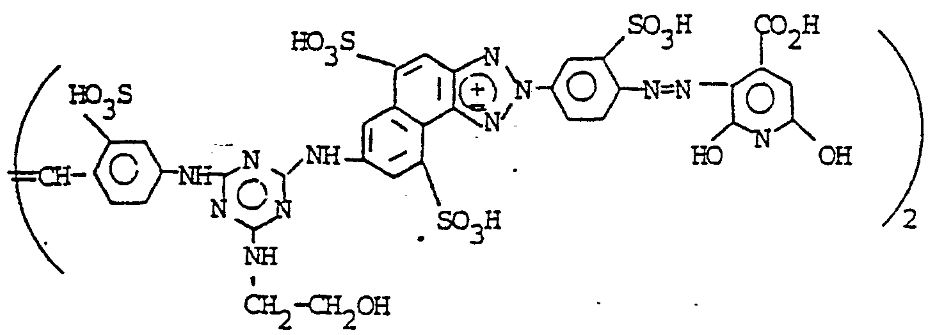

(24)

Der Farbstoff färbt Baumwolle und Papier rotstichig gelb. Farbtonangabe gemäß CI Hue Indication Chart: rotstichig gelb (3)

**Beispiel 2**

56 Teile Cyanurchlorid werden mit 50 Teilen Eis, 100 Teilen Wasser und 1 Teil Emulgator (Levapon OL) intensiv verrührt. Dazu wird bei 0-5°C eine Lösung von 55,3 Teilen 4,4'-Diaminostilben-2,2'-disulfonsäure in 750 Teilen Wasser gegossen. Mit Sodalösung wird ein pH-Wert von ca. 3 eingehalten. Nach 1 1/2 Stunden wird eine Suspension von 440 Teilen des Diaminotriazols der Formel

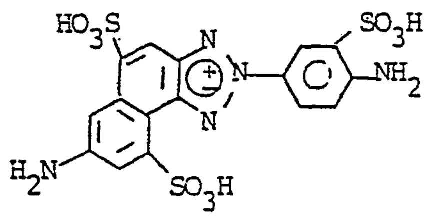

(feuchte Paste) in 400 Teilen Wasser zugegeben und die Umsetzung bei 40°C in 3 Stunden beendet.

Nach dem Abkühlen werden 200 Teile 10 %ige $NaNO_2$-Lösung zugesetzt und mit Eis auf unter 10°C gekühlt. Mit konzentrierter Salzsäure wird ein pH-Wert 2,8 eingestellt. Nach 1 1/2 Stunden wird überschüssiges Nitrit mit Amidosulfonsäure vernichtet und 37,5 Teile 2,4,6-Trihydroxypyrimidin zugefügt und bei einem pH-Wert von 8 gekuppelt. Es wird mit 20 Prozent Kochsalz ausgesalzen, der ausgefallene Farbstoff abgesaugt und getrocknet.
Ausbeute: 585 Teile Farbstoff der Formel (25)

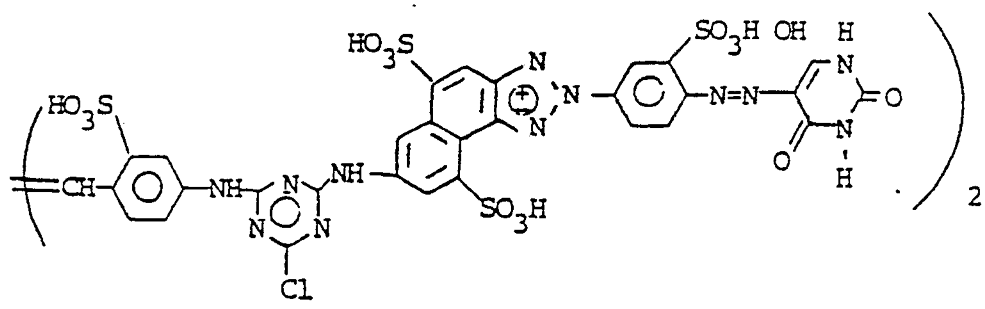 (25)

Der Farbstoff färbt papier und Baumwolle gelb. Farbtonangabe gemäß CI Hue Indication Chart: gelb (2).

**Beispiel 3**

56 Teile Cyanurchlorid werden mit 52 Teilen Eis, 100 Teilen Wasser und 1 Teil Emulgator (Levapon OL) gut verrührt. Dazu wird eine Suspension von 468,5 Teilen des Diaminotriazols der Formel

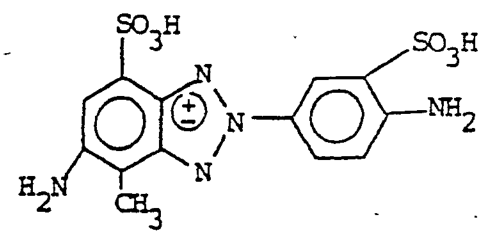

(feuchte Paste) in 750 Teilen Wasser gegeben und die Umsetzung bei 5-10°C und pH 3 ausgeführt. Eine Lösung von 54,6 Teilen (4,4'-diaminostilben-2,2'-disulfonsäure in 750 ml Wasser wird zugegossen und die Reaktion bei 40°C und pH 5,5 beendet. Nach dem Auskühlen werden 202 Teile 10 %ige Natriumnitritlösung zugesetzt, mit Eis auf unter 10°C gekühlt und mit konzentrierter Salzsäure ein pH-Wert von 2,5 eingestellt. Nach 2 Stunden wird der Nitritüberschuß entfernt und eine Suspension von 61 Teilen Acetessigorthoanisidid in 160 Teilen Wasser und 200 Teilen Sodalösung zugefügt. Es wird bei pH 8,2 gekuppelt, 35 Teile Ethanolamin zugesetzt und 3 Stunden bei einer Temperatur unter 90°C gerührt. Es wird mit 5 Prozent NaCl ausgesalzen, abgesaugt und getrocknet. Ausbeute 225 Teile Farbstoff der Formel (26)

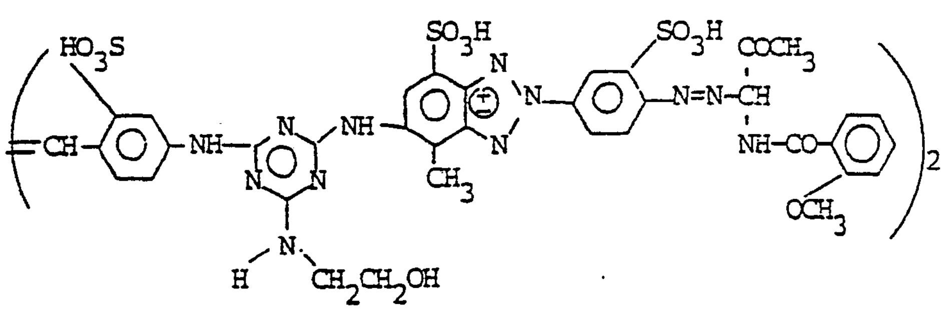 (26)

Der Farbstoff färbt Baumwolle und Papier grünstichig gelb. Farbtonangabe gemäß CI Hue Indication Chart: grünstichig gelb (1)

**Beispiel 4**

6,9 Teile 4,4'-Diaminostilben-2,2'-disulfonsäure werden in 90 Teilen Wasser frei pH 6 gelöst und Emulgator (Levapon OL) zugesetzt. Bei 0° C werden 3,65 Teile S-Trifluortriazin zugegeben und ein pH-Wert von 3,5 gehalten. 55,5 Teile Diaminotriazol der Formel

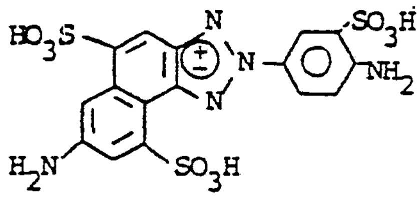

(feuchte Paste) werden in 250 Teilen heißem Wasser gelöst, auf 0° C abgekühlt und zum obigen Vorkondensat gegeben. Es wird ein pH-Wert von 8 gehalten und die Temperatur langsam auf 15° C gesteigert. Nach beendeter Umsetzung wird tetrazotiert und auf 7,65 Teile Acetessigorthoanisidid gekuppelt, das ausgefallene produkt abgesaugt und getrocknet.
Ausbeute: 45,6 Teile Farbstoff der Formel (27)

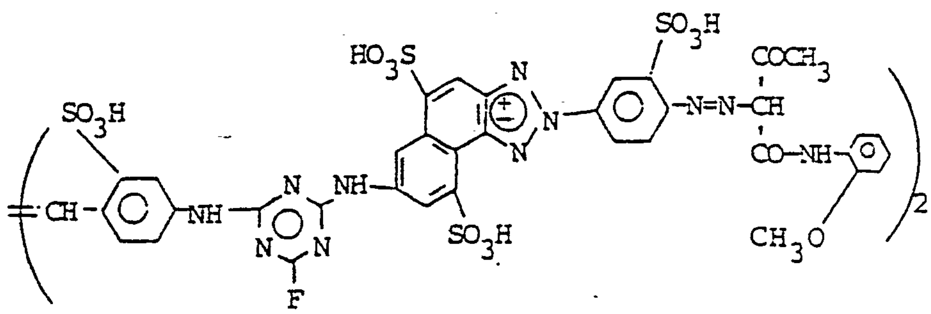

(27)

Der Farbstoff färbt Baumwolle grünstichig gelb. Farbtonangabe gemäß CI Hue Indication Chart: grünstichig gelb (1). In Analogie zum Beispiel 1 wurden die die in der folgenden Tabelle 1 aufgeführten Farbstoffe hergestellt. Dabei bedeuten die einzelnen Spalten der Tabelle:
I: Diaminotriazol, wobei

E1 für

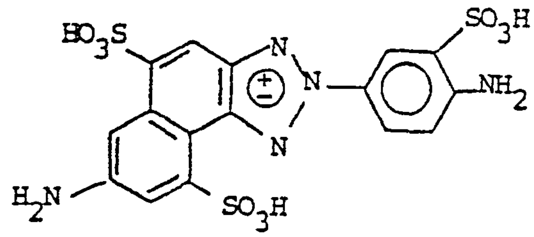

und

E2 für

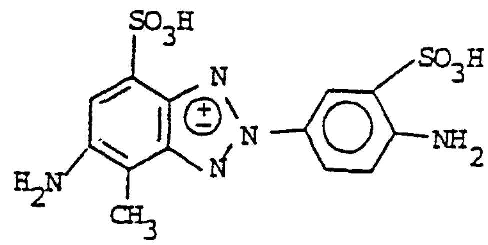

steht.

II: Mittelkomponente der Struktur H-W-M-W-H.

III: Eingesetztes s-Halogentriazin, wobei CC für Cyanurchlorid und CF für Cyanurfluorid steht.

IV: Gegebenenfalls eingesetztes Nucleophil X-H.

V: Kupplungskomponente HK.

VI: Farbton auf Baumwolle mit Angabe der Indikatorzahl nach Colour Index Hue Indication Chart.

Tabelle 1

| Bsp. Nr. | I | I | II | IV | V | VI |
|---|---|---|---|---|---|---|
| 5 | $E_1$ | 4,4'-Diaminostilben-2,2'-disulfonsäure | CC | - | 2,6-Dihydroxypyridin-4-carbonsäure | rotstichig gelb (3) |
| 6 | $E_1$ | " | CF | - | " | " |
| 7 | $E_1$ | " | CC | Morpholin | " | " |
| 8 | $E_2$ | " | CC | - | " | " |
| 9 | $E_2$ | " | CF | - | " | " |
| 10 | $E_2$ | " | CF | $H_2N-CH_2-CH_2OH$ | " | " |
| 11 | $E_1$ | " | CF | - | 2,4,6-Trihydroxypyrimidin | gelb (2) |
| 12 | $E_1$ | " | CC | - | " | " |
| 13 | $E_1$ | " | CC | $H_2N-CH_2-CH_2OH$ | " | " |
| 14 | $E_2$ | " | CF | $H_2N-CH_2-CH_2OH$ | " | " |
| 15 | $E_2$ | " | CF | - | " | " |
| 16 | $E_2$ | " | CC | - | " | " |
| 17 | $E_1$ | 4,4'-Diaminostilben-2,2'-disulfonsäure | CC | - | 2-Cyanamino-4,6-dihydroxypyrimidin | rotstichig gelb (2-3) |
| 18 | $E_1$ | " | CF | - | " | " |
| 19 | $E_1$ | " | CC | $H_2N-CH_2-CH_2OH$ | " | " |
| 20 | $E_1$ | " | CC | $HN(CH_2-CH_2OH)_2$ | " | " |

**Tabelle 1** (Fortsetzung)

| Bsp. Nr. | I | II | III | IV | V | VI |
|---|---|---|---|---|---|---|
| 21 | $E_1$ | 4,4'-Diaminostilben-2,2'-disulfonsäure | CF | 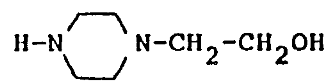 | 2-Cyanoamino-4,6-dihydroxypyrimidin | rotstichig gelb (2-3) |
| 22 | $E_2$ | " | CF | - | " | " |
| 23 | $E_2$ | " | CC | $H_2N-CH_2-CH_2OH$ | " | " |
| 24 | $E_1$ | " | CC | - | Acetessigsäure-ortho-anisidid | grünstichig gelb (1) |
| 25 | $E_1$ | " | CF | $NH_3$ | " | " |
| 26 | $E_1$ | " | CF | $HN(CH_2CH_3)_2$ | " | " |
| 27 | $E_2$ | " | CC | $H_2N-CH_2-CH_2OH$ | " | " |
| 28 | $E_2$ | " | CC | - | " | " |
| 29 | $E_2$ | " | CF | - | " | " |
| 30 | $E_1$ | " | CC | N-Methylanilin | 1-(4-Sulfophenyl)-pyrazolon-3-carbonsäure | rotstichig gelb (3) |
| 31 | $E_2$ | " | CC | - | " | " |
| 32 | $E_1$ | " | CC | $H_2N-CH_2-CH_2OH$ | 1,4-Dimethyl-2-hydroxy-pyridon-(6) | rotstichig gelb (3-4) |
| 33 | $E_1$ | " | CF | Cyclohexylamin | " | " |
| 34 | $E_1$ | " | CC | - | " | " |
| 35 | $E_2$ | " | CC | $H_2N-CH_2-CH_3OH$ | " | " |

**Tabelle 1** (Fortsetzung)

| Bsp. Nr. | I | II | III | IV | V | VI |
|---|---|---|---|---|---|---|
| 36 | $E_2$ | 4,4'-Diaminostilben-2,2'-disulfonsäure | CF | - | 1,4-Dimethyl-2-hydroxy-pyridon-(6) | rotstichig gelb (3-4) |
| 38 | $E_1$ | Benzidin-3-sulfonsäure | CC | - | 2,4,6-Trihydroxy-pyrimidin | gelb (2) |
| 39 | $E_1$ | 4,4'-Diaminodiphenyl-harnstoff-3,3'-disulfonsäure | CC | - | " | " |
| 40 | $E_1$ | 1,5-Diaminonaphthalin-3,7-disulfonsäure | CC | - | 2,4,6-Trihydroxy-pyrimidin | gelb (2) |
| 41 | $E_1$ | " | CF | $H_2N-CH_2-CH_2OH$ | " | " |
| 42 | $E_1$ | 4,4'-Diaminodiphenyl-amin-2-sulfonsäure | CC | - | " | " |
| 43 | $E_2$ | 1,4-Diaminonapthalin-6-sulfonsäure | CC | $H_2N-CH_2CH_2OH$ | 1,3-Dimethylpyra-zolon | rotstichig gelb (3-4) |
| 44 | $E_2$ | 2,5-Diaminobenzol-sulfonsäure | CF | - | 1-(2-carboxyl-ethyl)-pyrazolon-3-carbonsäure | " |

**Patentansprüche**

1. Triazol-triazinyl-azo-Farbstoffe der allgemeinen Formel
K-N=N-T-NR-D-NR'-T'-N=N-K' (1)
worin
K,K' = Rest einer Kupplungskomponente der Benzol-, Naphthalin- oder heterocyclischen Reihe oder Rest einer enolisierbaren CH-aciden Verbindung,
T,T' = Rest der allgemeinen Formel

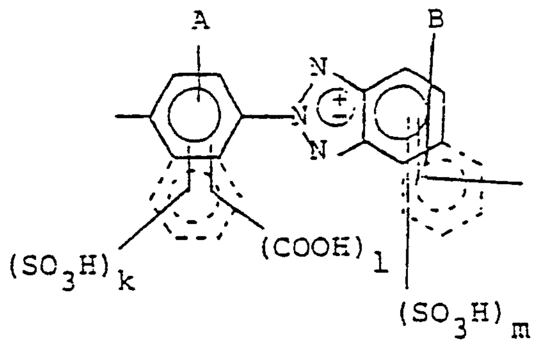
(2)

worin
A = H oder nichtionogener Substituent,
B = H, $C_1$-$C_4$-Alkyl oder $C_1$-$C_4$-Alkoxy,
k, m = 0, 1 oder 2,
l = 0 oder 1
und wobei das triazolhaltige Ringsystem jeweils an dem Rest NR und NR' gebunden ist,
R, R' = H, $C_1$-$C_4$-Alkyl oder $C_1$-$C_4$-Hydroxyalkyl,
D = Rest der allgemeinen Formel

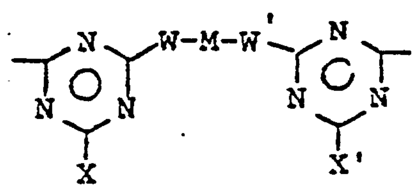
(3)

wobei
W, W' = $NR^2$, mit $R^2$ = H, $C_1$-$C_4$-Alkyl oder $C_1$-$C_4$-Hydroxyalkyl,
X, X' = Substituent,
M = gegebenenfalls substituierter Rest der Benzol- oder Naphthalinreihe.

2. Triazol-Triazinyl-Azo-Farbstoffe der allgemeinen Formel gemäß Anspruch 1, dadurch gekennzeichnet, daß M für einen Substituenten $M_1$ der Formeln

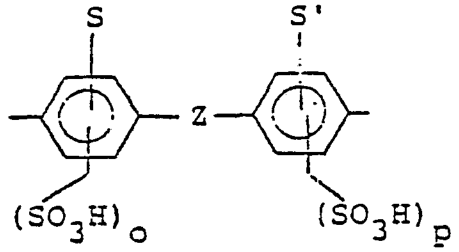

(4)

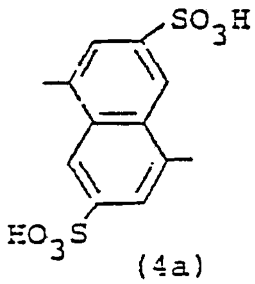

(4a)

und

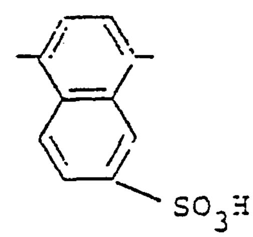

(4b)

steht, worin
S, S' = H, COOH, $CH_2COOH$ oder nichtionogener Substituent,
Z = direkte Bindung oder -CH = CH
o, p = 0 oder 1
und daß X, X' für Halogen oder eine Gruppe der Formel-

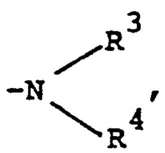

$-OR^5$ oder $-SR^5$ steht, wobei
$R^3$, $R^4$ unabhängig voneinander H, $C_1$-$C_4$-Alkyl, $C_1$-$C_4$-Hydroxyalkyl, Aryl, Aralkyl, Cycloalkyl oder einen Heterocyclus bedeuten oder zusammen, gegebenenfalls unter Einschluß eines oder mehrerer Heteroatome einen Ring bilden, insbesondere einen 5- oder 6-gliedrigen, und $R^5$ für H, $C_1$-$C_4$-Alkyl, $C_1$-$C_4$-Hydroxyalkyl, Aryl oder Aralkyl oder einen heterocyclischen Rest steht, und die übrigen Substituenten die im Anspruch 1 angegebene Bedeutung haben.

3. Triazol-triazinyl-azo-Farbstoffe der allgemeinen Formeln
K-N=N-T-NR-D-NR-T-N=N-K (5)
K-N=N-T-NR-$D^1$-NR'-T'-N=N-K' (6)
$K^2$-N=N-T-NR-$D^1$-NR-T-N=N-$K^2$ (8)
$K^2$-N=N-$T^1$-NR-D-NR-$T^1$-N=N-$K^2$ (9)
$K^2$-N=N-$T^2$-NR-D-NR-$T^2$-N=N-$K^2$ (11)
$K^2$-N=N-$T^3$-NR-D-NR-$T^3$-N=N-$K^2$ (13)
$K^2$-N=N-$T^4$-NR-D-NR-$T^4$-N=N-$K^2$ (14)
$K^2$-N=N-$T^3$-NH-$D^2$-NH-$T^3$-N=N-$K^2$ (17)
$K^2$-N=N-$T^4$-NH-$D^2$-NH-$T^4$-N=N-$K^2$ (18)
worin K, K', D, T, T', R, R' die in Anspruch 1 angegebene Bedeutung besitzen und die übrigen Substituenten folgende Bedeutung haben,
$K^2$ = Rest einer Kupplungskomponente der Benzol-, Naphthalin-, Pyrazolon-, pyridon-, pyrimidon-, Indol-, Aminopyrazol-, Aminopyridin-, Aminopyrimidin-, Chinolon-, Cumerin oder Acetessigsäurearylid-Reihe,
$D^1$ = Rest der allgemeinen Formel

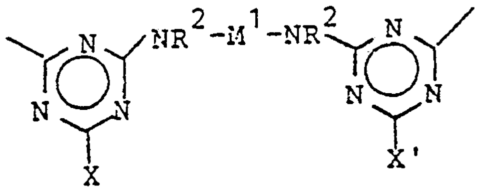

worin X, X', $R^2$ die in Anspruch 1 angegebene Bedeutung besitzt und $M_1$ die in Anspruch 2 angegebene Bedeutung hat,

$D^2$ = Rest der allgemeinen Formel

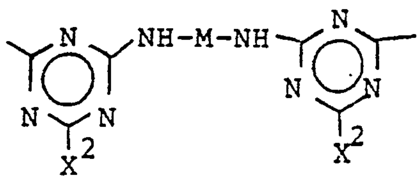

(19)

worin

$X^2$ = F, Cl, $OR^5$ oder

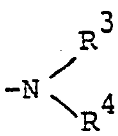

wobei $R^3$, $R^4$ und $R^5$
die in Anspruch 2) angegebene Bedeutung haben und
M = die in Anspruch 1) angegebene Bedeutung hat,
$T^1$ = Rest der allgemeinen Formel

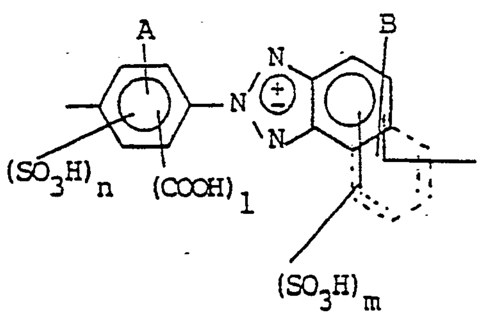

(10)

worin
A = H oder nichtionogener Substituent
B = H, $C_1$-$C_4$-Alkyl oder $C_1$-$C_4$-Alkoxy,
n = 0 oder 1,
l = 0 oder 1
und wobei das triazolhaltige Ringsystem an den Rest NR gebunden ist,
$T^2$ = Rest der allgemeinen Formel

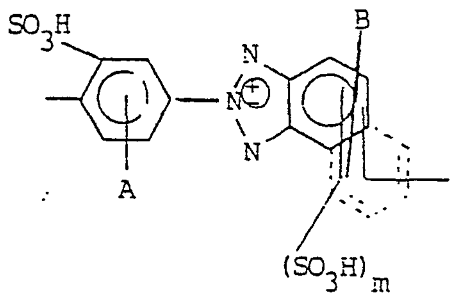

(12)

worin
A und B die vorgenannte Bedeutung haben und
m für 0, 1 oder 2 steht, und wobei das triazolhaltige Ringsystem an den Rest NR gebunden ist,
$T_3$ = Rest der Formel

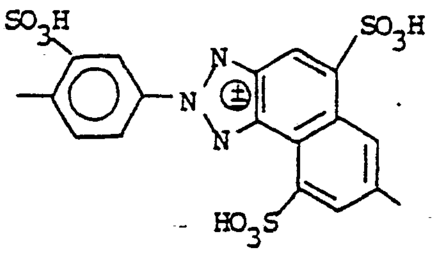

(15)

$T_4$ = Rest der Formel

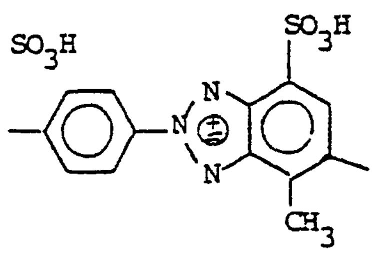

(16)

wobei bei den Resten $T_3$ und $T_4$ das triazolhaltige Ringsystem an den Rest NR bzw. NH gebunden ist.

4. Verfahren zur Herstellung von Triazol-triazinylazo-Farbstoffen der allgemeinen Formel
K-N=N-T-NR-D-NR'-T'-N=N-K
worin
K, K' = Rest einer Kupplungskomponente der Benzol-, Naphthalin- oder heterocyclischen Reihe oder Rest einer enolisierbaren CH-aciden Verbindung,
T, T' = Rest der allgemeinen Formel

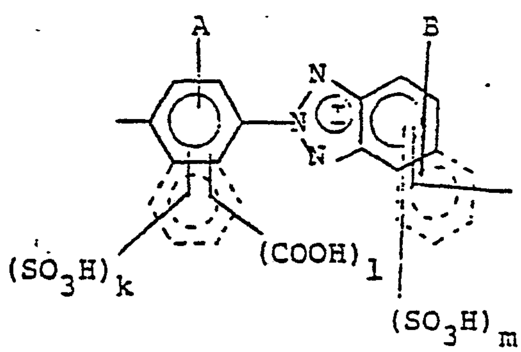

(2)

worin
A = H oder nichtionogener Substituent,
B = H, $C_1$-$C_4$-Alkyl oder $C_1$-$C_4$-Alkoxy,

k, m = 0, 1 oder 2
l = 0 oder 1
und wobei das triazolhaltige Ringsystem jeweils an dem Rest NR und NR' gebunden ist,
R, R' = H, $C_1$-$C_4$-Alkyl oder $C_1$-$C_4$-Hydroxyalkyl,
D = Rest der allgemeinen Formel

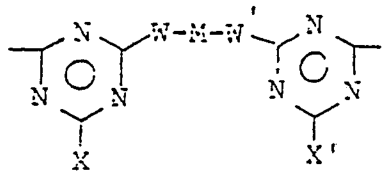

(3)

wobei
W, W' = $NR^2$
mit $R^2$ = H, $C_1$-$C_4$-Alkyl oder $C_1$-$C_4$-Hydroxyalkyl,
X, X' = Substituent,
M = direkte Bindung oder -CH = CH-,
dadurch gekennzeichnet, daß man die Einzelkomponenten Kupplungskomponenten HK, HK', Diaminotriazole $H_2N$-T-$NH_2$, $H_2N$-T'-$NH_2$, Cyanurchlorid bzw. Cyanurfluorid, die Mittelkomponente H-W-M-W'-H und gegebenenfalls ein Nucleophil XH in beliebiger Reihenfolge miteinander umsetzt.

5) Verwendung von Farbstoffen gemäß Anspruch 1-3 zum Färben und Bedrucken von textilen Substraten.

6) Mit Farbstoffen gemäß Anspruch 1-3 gefärbtes oder bedrucktes textiles Substrat.

**Revendications**

1. Colorants triazolo-triazinyl-azoïques de formule générale
K-N=N-T-NR-D-NR'-T'-N=N-K' (1) dans laquelle
K,K' = reste d'un copulant de la série benzénique, naphtalénique ou hétérocyclique ou un reste d'un composé à groupe acide CH énolisable,
T,T' = reste de formule générale

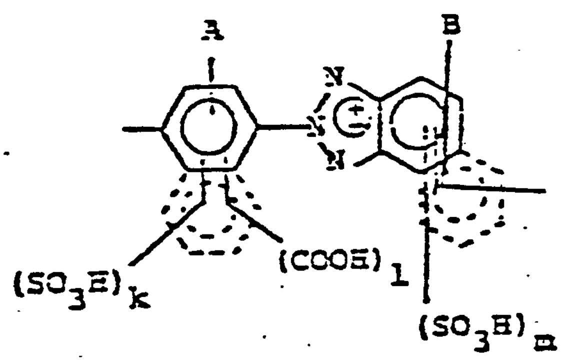

(2)

dans laquelle
A = H ou substituant non ionogène,
B = H, alkyle en $C_1$ à $C_4$ ou alkoxy en $C_1$ à $C_4$,
k, m = 0,1 ou 2,
l = 0 ou 1
et le système cyclique contenant le triazole est lié dans chaque cas au reste NR et au reste NR',
R, R = H, alkyle en $C_1$ à $C_4$ ou hydroxyalkyle en $C_1$ à $C_4$,
D = reste de formule générale

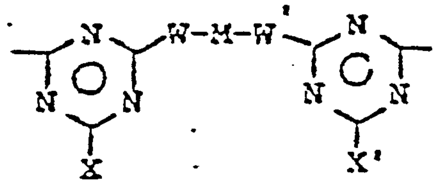

(3)

dans laquelle
W, W' = $NR^2$,
avec $R^2$ = H, alkyle en $C_1$ à $C_4$ ou hydroxyalkyle en $C_1$ à $C_4$,
X, X' = substituant,
M = reste éventuellement substitué de la série du benzène ou du naphtalène.

2. Colorants triazolo-triazinyl-azoïques de formule générale suivant la revendication 1, caractérisés en ce que H représente un substituant $H_1$ de formules

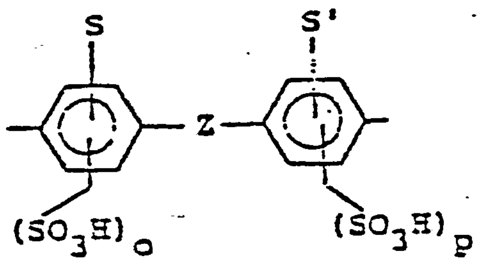

(4)

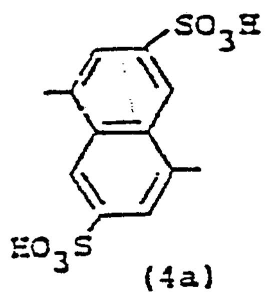

(4a)

et

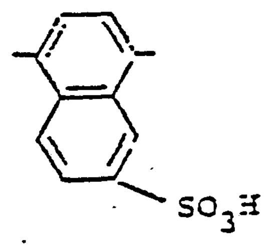

(4b)

où
S,S' = H, COOH, $CH_2COOH$ ou un substituant non ionogène,
Z = liasion directe ou -CH= CH-,
o, p = 0 ou 1
et en ce que X, X' représentent un halogène ou un groupe de formule

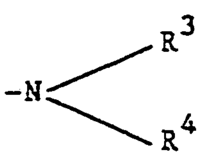, $-OR^5$ ou $-SR^5$

où
$R^3$, $R^4$ représentent, indépendamment l'un de l'autre, H, un groupe alkyle en $C_1$ à $C_4$, hydroxyalkyle en $C_1$ à $C_4$, aryle, aralkyle, cycloalkyle ou un hétérocycle ou forment, en incluant éventuellement un ou plusieurs hétéroatomes, un noyau, notamment un noyau pentagonal ou hexagonal, et $R^5$ représente H, un groupe alkyle en $C_1$ à $C_4$, hydroxyalkyle en $C_1$ à $C_4$, aryle ou aralkyle ou un reste hétérocyclique et les autres substituants ont la définition indiquée dans la revendication 1.

3. Colorants triazolo-triazinyl-azoïques de formules générales
K-H=N-T-NR-D-NR-T-N=N-K (5)
K-N=N-T-NR-$D^1$-NR'-T'-N=N-K' (6)
$K^2$-N=N-T-NR-$D^1$-NR-T-N=N-$R^2$ (8)
$K^2$-N=N-$T^1$-NR-D-NR-$T^1$-N=N-$K^2$ (9)

$K^2$-N = N-$T^2$-NR-D-NR-$T^2$-N = N-$K^2$ (11)
$K^2$-N = N-$T^3$-NR-D-NR-$T^3$-N = N-$K^2$ (13)
$K^2$-N = N-$T^4$-NR-D-NR-$T^4$-N = N-$K^2$ (14)
$K^2$-N = N-$T^3$-NR-$D^2$-NH-$T^3$-N = N-$K^2$ (17)
$K^2$-K = N-$T^4$-NH-$D^2$-NH-$T^4$-N = N-$K^2$ (18)

dans lesquelles K, K', D, T, T', R, R' ont la définition indiquée dans la revendication 1 et les autres substituants ont les définitions suivantes,

$K^2$ = reste d'un copulant de la série du benzène, du naphtalène, de la pyrazolone, de la pyridone, de la pyrimidone, de l'indole, de l'aminopyrazole, de l'aminopyridine, de l'aminopyrimidine, de la quinolone, de la coumarine ou des arylides d'acide acétylacétique,

$D^1$ = reste de formule générale

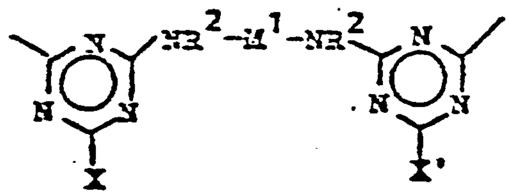

dans laquelle X, X', $R^2$ ont la définition indiquée dans la revendication 1 et $M_1$ a la définition indiquée dans la revendication 2,

$D^2$ = reste de formule générale

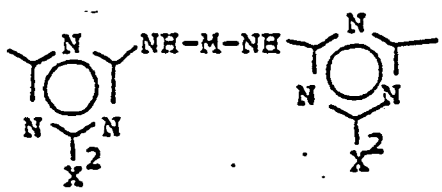

(19)

dans laquelle
$X^2$ = F, Cl, $OR^5$ ou

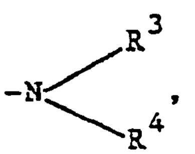

où $R^3$, $R^4$ et $R^5$ ont
la définition indiquée dans la revendication 2 et
M = a la définition indiquée dans la revendication 1,
$T^1$ = reste de formule générale

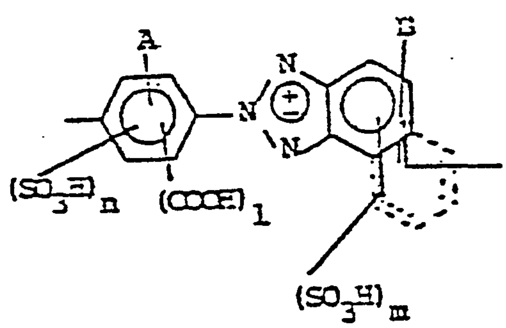

(10)

dans laquelle
A = H ou substituant non ionogène,
B = H, alkyle en $C_1$ à $C_4$ ou alkoxy en $C_1$ à $C_4$,

n = 0 ou 1,
l = 0 ou 1
et le système cyclique contenant le triazole est lié au reste NR,
$T^2$ = reste de formule générale

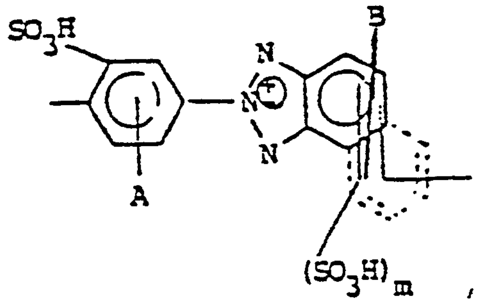

(12)

dans laquelle
A et B ont la définition indiquée ci-dessus et
m a la valeur 0, 1 ou 2, le système cyclique contenant le triazole étant lié au reste NR,
$T_3$ = reste de formule

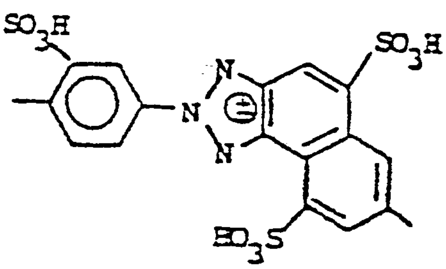

(15)

$T_4$ = reste de formule

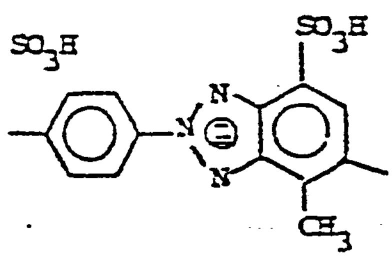

(16)

le système cyclique contenant le triazole, dans le cas des restes $T_3$ et $T_4$, étant lié au reste NR et, respectivement, NH.

4. Procédé de production de colorants triazolotriazinyl-azoïques de formule générale
K-N=N-T-NR-D-NR'-T'-N=N-K
dans laquelle
K, K' = reste d'un copulant de la série benzénique, naphtalénique ou hétérocyclique ou un reste d'un composé acide à CH énolisable,
T, T' = reste de formule générale

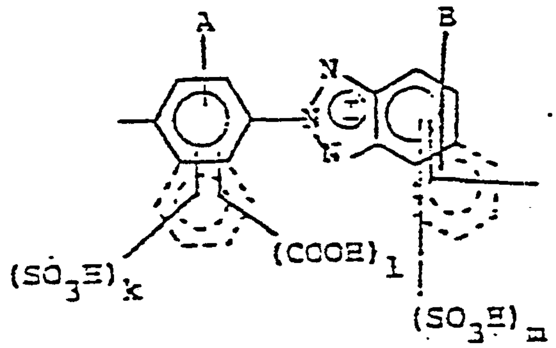

(2)

dans laquelle
A = H ou substituant non ionogène,
B = H, alkyle en $C_1$ à $C_4$ ou alkoxy en $C_1$ à $C_4$,
k, m = 0, 1 ou 2,
l = 0 ou 1
et le système cyclique contenant le triazole est lié dans chaque cas au reste NR et NR',
R, R' = H, alkyle en $C_1$ à $C_4$ ou hydroxyalkyle en $C_1$ à C4,
D = reste de formule générale

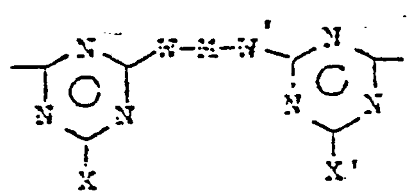

(3)

dans laquelle
W, W' = $NR^2$,
avec $R^2$ = H, groupe alkyle en $C_1$ à $C_4$ ou groupe hydroxyalkyle en $C_1$ à $C_4$,
X, X' = substituant,
M = liaison directe ou -CH =CH-, caractérisé en ce qu'on fait réagir ensemble dans un ordre quelconque les composants individuels, à savoir copulants HK, HK', diaminotriazoles $H_2N$-T-$NH_2$, $H_2N$-T'-$NH_2$, chlorure de cyanuryle ou fluorure de cyanuryle, le composant central H-W-M-W'-H et, le cas échéant,un nucléophile XH.

5. Utilisation de colorants suivant les revendications 1-3 pour la teinture et l'impression de substrats textiles.

6. Substrat textile teint ou imprimé avec des colorants suivant les revendications 1 à 3.

## Claims

1. Triazole-triazinyl-azo dyestuffs of the general formula
K-N=N-T-NR-D-NR'-T'-N=N-K' (1)
wherein
K, K' = radical of a coupling component of the benzene, naphthalene or heterocyclic series or radical of an enolisable CH-acidic compound, T, T' = radical of the general formula

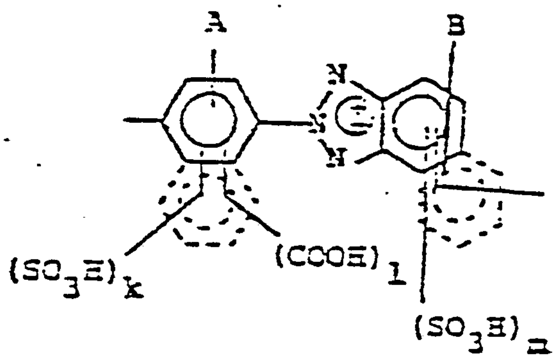

(2)

wherein
A = H or nonionic substituent,
B = H, $C_1$-$C_4$-alkyl or $C_1$-$C_4$-alkoxy,
k, m = 0, 1 or 2,
l = 0 or 1
and where it is the triazole-containing ring system, which is bonded to the radicals NR and NR' respectively,
R, R' = H, $C_1$-$C_4$-alkyl or $C_1$-$C_4$-hydroxyalkyl, D = radical of the general formula

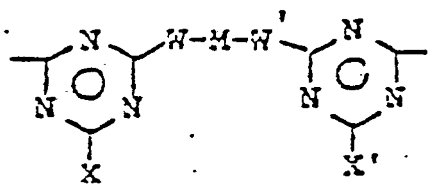

(3)

where
W, H' = $NR^2$ with $R^2$ = H, $C_1$-$C_4$-alkyl or $C_1$-$C_4$-hydroxyalkyl,
X, X' = substituent,
M = optionally substituted radical of the benzene or naphthalene series.

2. Triazole-triazinyl-azo dyestuffs of the general formula according to Claim 1, characterised in that M stands for a substituent M1 of the formulae

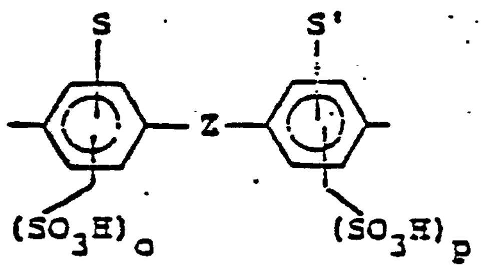

(4)

(4b)

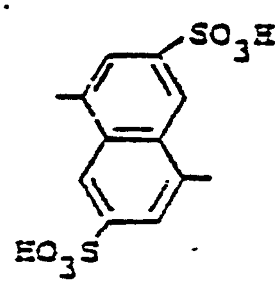

and

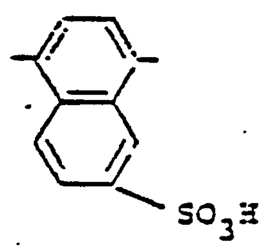

(4a)

wherein
S, S' = H, COOH, $CH_2COOH$ or nonionic substituent,

Z = direct bond or -CH = CH-,
o, p = 0 or 1
and in that X and X' stand for halogen or a group of the formula

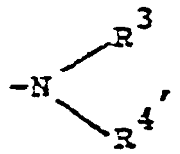

-$OR^5$ or -$SR^5$,
where
$R^3$ and $R^4$ independently of each other denote H, $C_1$-$C_4$-alkyl, $C_1$-$C_4$-hydroxyalkyl, aryl, aralkyl, cycloalkyl or a heterocyclic system or together, with or without inclusion of one or more hetero atoms, form a ring, in particulai a 5- or 6-membered ring, and
$R^5$ stands for H' $C_1$-$C_4$-alkyl, $C_1$-$C_4$-hydroxy-alkyl, aryl or aralkyl or a heterocyclic radical, and the remaining substituents have the meaning indicated in Claim 1.

3. Triazole-triazinyl-azo dyestuffs of the general formulae
$K^2$-N=N-$T^1$-NR-D-NR-$T^1$-N=N-$K^2$ (9)
$K^2$-N=N-$T^2$-NR-D-NR-$T^2$-N=K-$K^2$ (11)
$K^2$-N=N-$T^3$-NR-D-NR-$T^3$-N=N-$K^2$ (13)
$K^2$-H=N-$T^4$-NR-D-NR-$T^4$-N=N-$K^2$ (14)
$K^2$-N=N -$T^3$-NH-$D^2$-NH-$T^3$-N=N-$K^2$ (17)
$K^2$-K=N-$T^4$-NH-$D^2$-NH-$T^4$-N=N-$K^2$ (18)
wherein
K, K', D, T, T', R and R' have the meanings indicated in Claim 1 and the remaining substituents have the following meaning:
$K^2$ = radical of a coupling component of the benzene, naphthalene, pyrazolone, pyridone, pyrimidone, indole, aminopyrazole, aminopyridine, aminopyrimidine, quinolone, coumarin or acetoacetarylide series,
$D^1$ = radical of the general formula

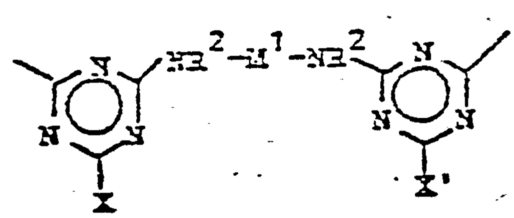

wherein
X, X' and $R^2$ have the meaning indicated in Claim 1 and
$M^1$ has the meaning indicated in Claim 2,
$D^2$ = radical of the general formula

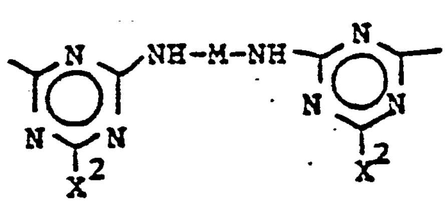

(19)

wherein
$X^2$ = F, Cl, $OR^5$ or -N

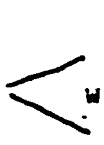

where

$R^3$, $R^4$ and $R^5$ have the meaning indicated in Claim 2) and
M = has the meaning indicated in Claim 1),

$T^1$ = radical of the General formula

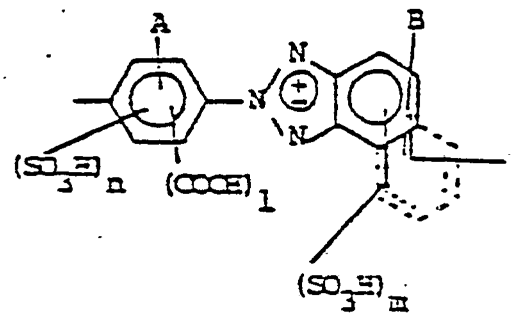

(10)

wherein
A = H or nonionic substituent
B = H, $C_1$-$C_4$-alkyl or $C_1$-$C_4$-alkoxy,
n = 0 or 1,
l = 0 or 1
and where it is the triazole-containing ring system which is bonded to the radical NR,
$T^2$ = radical of the general formula

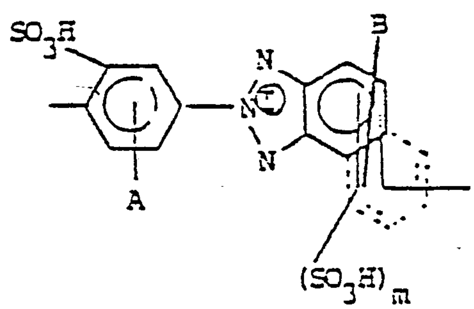

(12)

wherein
A and B have the abovementioned meaning and m stands for 0, 1 or 2, and where it is the triazole-containing ring system which is bonded to the radical NR,
$T^3$ = radical of the formula

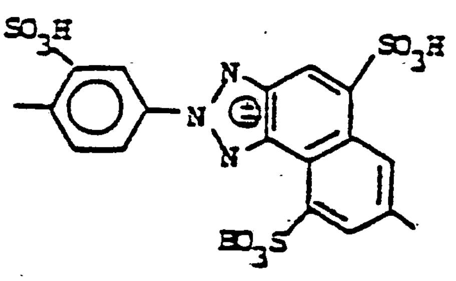

(15)

$T_4$ = radical of the formula

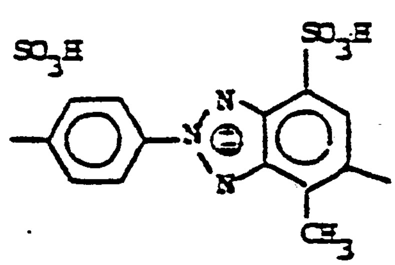

(16)

where in the radicals $T_3$ and $T_4$ it is the triazolecontaining ring system which is bonded to the radicals NR and NH respectively.

4. Process for preparing triazole-triazinyl-azo dyestuffs of the general formula
K-N=N-T-NR-D-NR'-T'-N=N-K

wherein

K, K' = radical of a coupling component of the benzene, naphthalene or heterocyclic series or radical of an enolisable CH-acidic compound, T, T' = radical of the general formula

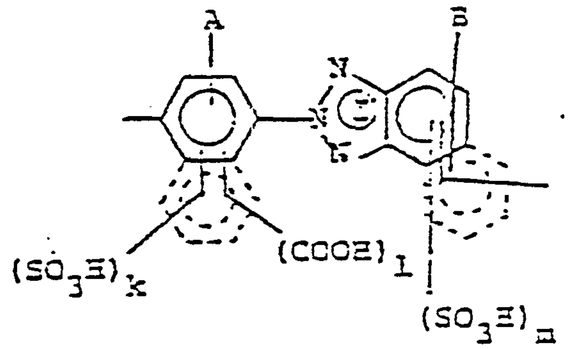

(2)

wherein

A = H or nonionic substituent,

B = H, $C_1$-$C_4$-alkyl or $C_1$-$C_4$-alkoxy,

k, m = 0, 1 or 2,

l = 0 or 1

and where it is the triazole-containing ring system which is bonded to the radicals NR and NR' respectively,

R, R' = H, $C_1$-$C_4$-alkyl or $C_1$-$C_4$-hydroxyalkyl,

D = radical of the general formula

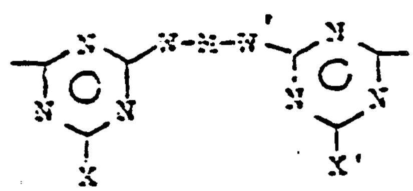

(3)

where

W, H' = $NR^2$ with $R^2$ = H, $C_1$-$C_4$-alkyl or $C_1$-$C_4$-hydroxyalkyl,

X, X' = substituent,

M = direct bond or -CH = CH-,

characterised in that the individual components, namely coupling components HK, HK', diaminotriazoles $H_2N$-T-$NH_2$, $H_2N$-T'-$NH_2$, cyanuric chloride or cyanuric fluoride, the middle component H-W-M-H'-H and if desired a nucleophile XH, are reacted with one another in any order.

5) Use of dyestuffs according to Claims 1-3, for dyeing and printing textile substrates.

6) Textile substrate dyed or printed with dyestuffs according to Claims 1-3.